Europäisches Patentamt

European Patent Office

Office européen des brevets

(11) Veröffentlichungsnummer: **0 417 494 A2**

## (12) EUROPÄISCHE PATENTANMELDUNG

(21) Anmeldenummer: 90115630.7

(22) Anmeldetag: 16.08.90

(51) Int. Cl.⁵: **F16J 15/08**

(30) Priorität: 09.09.89 DE 3930120

(43) Veröffentlichungstag der Anmeldung:
20.03.91 Patentblatt 91/12

(84) Benannte Vertragsstaaten:
DE FR GB IT

(71) Anmelder: **GOETZE AG**
**Bürgermeister-Schmidt-Strasse 17**
**W-5093 Burscheid 1(DE)**

(72) Erfinder: **Klein, Bernhard, Dipl.-Ing.**
**Rosenweg 8**
**W-5068 Odenthal-Blecher(DE)**

(54) **Metallische Flachdichtung, insbesondere Zylinderkopfdichtung.**

(57) Bei einer metallischen Flachdichtung, wie insbesondere einer Zylinderkopfdichtung für Verbrennungskraftmaschinen, aus einem Laminat mit mindestens drei übereinanderliegenden Metallblechplatten bestehen die die Dichtpressung an den Durchgangsöffnungen erhöhenden Maßnahmen aus ringförmigen, vorzugsweise im Siebdruckverfahren rundum die Flüssigkeitsöffnungen und rundum die Brennraumöffnungen auf das Kernblech bevorzugt beidseitig aufgetragenen, polymeren Auflagen, so daß die Dichtung mit verbesserter Abdichtgüte einfach und wirtschaftlich herstellbar und vor allem mit verbessertem Setzverhalten und Nachzugsfreiheit in Verbrennungsmotoren mit höheren Verbrennungsdrükken einsetzbar ist.

## FIG. 2

## METALLISCHE FLACHDICHTUNG, INSBESONDERE ZYLINDERKOPFDICHTUNG

Die Erfindung betrifft eine metallische Flachdichtung, wie insbesondere eine Zylinderkopfdichtung für Verbrennungskraftmaschinen, bestehend aus einem Metallplattenlaminat aus mindestens drei übereinanderliegenden Metallblechplatten mit die Dichtpressung und Abdichtwirkung erhöhenden Maßnahmen an mindestens einer der Durchgangsöffnungen.

Zur Erzielung von setzarmen und weitgehend nachzugsfreien Zylinderkopfdichtungen ist es bekannt, vor allem in Verbrennungskraftmaschinen mit hohen Verbrennungsdrucken metallische Zylinderkopfdichtungen einzusetzen. Nach beispielsweise der US - PS 4.776.601 oder der US - PS 4.797.695 bestehen solche metallischen Zylinderkopfdichtungen aus Laminaten mit drei oder mehr übereinanderliegenden Metallblechplatten. Die Bleche bestehen dabei bevorzugt aus Stahl, und es ist bekannt, in einem Laminat Stahlbleche mit unterschiedlichen Eigenschaften miteinander zu kombinieren. So können beispielsweise diese Kernbleche oder die Deckbleche aus dickeren und weicheren Stahlblechen und umgekehrt die Deckbleche beziehungsweise die Kernbleche aus dünneren elastischen und härteren Stahlblechen bestehen. Zusätzlich können bevorzugt nur die Deckbleche ein- oder beidseitig, teil- oder ganzflächig zum Korrosionsschutz und zur Verbesserung ihrer Mikro- und Makroabdichtung mit bevorzugt elastomeren Überzügen versehen sein.

Problematisch ist bei metallischen Dichtungen vor allem wegen der geringen plastischen Verformbarkeit die Abdichtung an den Durchgangsöffnungen für das Schmieröl, das Kühlmittel und den Brennraum. Bei laminierten Metalldichtungen ist es üblich, die Kernbleche und/oder die Deckbleche an den Durchgangsöf fnungen umzubördeln, umzufalzen und/oder zu sicken, um so die Dichtpressung und damit die Abdichtwirkung am Öffnungsrand zu erhöhen. Umfalzungen oder Umbördelungen an den Flüssigkeitsöffnungen reichen aber zur befriedigenden Abdichtung meist nicht aus, so daß dann in diese Öffnungen zusätzlich Elastomerringe zur optimalen Abdichtung eingesetzt werden müssen. Sicken an den Öffnungsrändern sind zwar elastisch verformbar, sie werden aber beim Einbau unter Anwendung hoher Dichtpressungsdrücke weitgehend flachgedrückt und verlieren ihre optimale Abdichtwirkung, so daß durch zusätzliche Maßnahmen, wie metallische Einlageringe in den Sickenhohlräumen oder Aussparungen in benachbarten umgesickten Metallblechen, das völlige Flachdrükken der Sicken verhindert werden muß.

Elastomere Einlegeringe und das Flachdrücken der Sicken verhindernde Maßnahmen sind zusätzliche Maßnahmen, die die Herstellungskosten der Flachdichtungen verteuern. Vor allem in der Massenfertigung sind dann solche Dichtungen nicht mehr wirtschaftlich.

Der vorliegenden Erfindung liegt daher die Aufgabe zugrunde, eine metallische Flachdichtung gemäß Oberbegriff des Hauptpatentanspruches zu schaffen, welche bei verbesserter Abdichtwirkung an mindestens einer Durchgangsöffnung einfach und wirtschaftlich herstellbar ist.

Erfindungsgemäß wird diese Aufgabe durch eine Flachdichtung gelöst, bei der zwischen Kernblechen und Deckblechen ein- oder beidseitig zumindest eine eine Durchgangsöffnung umgebende ringförmige Auflage aus Weichstoffmaterial vorgesehen ist. Bei den bevorzugt vor allem als Zylinderkopfdichtungen eingesetzten Flachdichtungen bestehen die Kernbleche aus einer relativ dicken Stahlblechplatte und die Deckbleche aus relativ dünnen Metallblechplatten bevorzugt aus Federstahl, und die Weichstoffauflagen sind dann, die Flüssigkeitsöffnungen und die Brennraumöffnungen umgebend, beidseitig auf dem Kernblech angeordnet.

Die Weichstoffauflagen bestehen bevorzugt aus einem gegenüber den Abdichtmedien beständigen Elastomer, wie bevorzugt einem Silikonelastomer oder einem Fluorelastomer, das besonders einfach als vulkanisierbare Masse im Siebdruckverfahren auf das Kernblech aufgetragen und nach dem Trocknen durch Erhitzen ausvulkanisiert und mit dem Kernblech haftfest verbunden werden kann.

Im Sinne der Erfindung können aber auch die Auflagen aus siebdruckfähigen Kunstharzmassen hergestellt werden, und die Massen können an den verschiedenen Durchgangsöffnungen, funktionsgerecht auf den Anwendungsfall abgestimmt, aus verschiedenen Polymeren bestehen. So bestehen bevorzugt die Auflagen an den Schmieröldurchgängen aus mineralölbeständigen Polymeren, an den Kühlmitteldurchgängen aus wasserbeständigen Polymeren und an den Brennraumöffnungen aus temperaturbeständigen und unter Zusatz von Füllstoffen und Faserstoffen druckfest gemachten Polymeren.

Die Dicke der Auflagen ist maximal etwa gleich der Dicke der aufliegenden Metalldeckbleche, so daß bei einer bevorzugten Kernblechdicke zwischen 0,5 und 2 mm und einer Deckblechdicke von 0,1 bis 0,4 mm die Auflagendicke zwischen etwa 0,01 und maximal 0,4 mm liegt. Falls erforderlich, kann die Dicke der Auflagen auf den Kernplatten unterschiedlich sein und innerhalb der angegebenen Grenzen variieren.

Die erfindungsgemäßen Zylinderkopfdichtungen werden in Motortestläufen getestet. Dabei zeigen sich an den Durchgangsöffnungen keine wesentlichen Leckagen durch Flüssigkeiten und durch Gasübertritt, auch nach längerem Gebrauch. Da die Dichtung an den Schraubenöf fnungen keine weichstoffauflagen besitzt, ist die Dichtung setzarm, und die Befestigungsschrauben brauchen nach dem Betrieb nicht mehr nachgezogen zu werden.

Durch die Erfindung ist somit eine metallische Flachdichtung geschaffen, die bei guter Abdichtwirkung und Nachzugsfreiheit der Befestigungsschrauben vor allem als Zylinderkopfdichtung in Verbrennungskraf tmaschinen mit hohen Verbrennungsdrücken einsetzbar ist. Da die Auflagen vor allem im Siebdruckverfahren relativ einfach hergestellt werden können und keine besonderen separaten Zusatzelemente mit gegebenenfalls besonderen Maßnahmen an der Dichtung befestigt werden müssen, ist die erfindungsgemäße Dichtung vor allem in der Massenfertigung wirtschaftlich herstellbar. Die Dichtungen sind dabei mit langer Lebensdauer funktionssicher einsetzbar.

Während die erfindungsgemäße Dichtung in erster Linie als Zylinderkopfdichtung eingesetzt werden soll, kann die Dichtung auch an anderen Dichtstellen mit ähnlicher Belastung, wie etwa als Auspuffflanschdichtung, Verwendung finden.

Im Sinne der Erfindung kann ferner die Dichtung mit an und für sich bei mehrlagigen Metalldichtungen bekannten Maßnahmen versehen sein. So können bevorzugt die Deckbleche ein- oder beidseitig, teil- oder ganzflächig mit dünnen elastomeren Überzügen versehen sein, oder die Dichtungsbleche können untereinander durch Nieten oder Umbördelungen eines Metallbleches an den Öffnungen und/oder den Dichtungsrändern verbunden sein.

Die Erfindung wird durch die beiden Abbildungen näher erläutert, und zwar zeigt:

Figur 1 die Aufsicht auf eine erfindugnsgemäße Zylinderkopfdichtung

Figur 2 ein Querschnittsbild in der Linie II-II der Zylinderkopfdichtung aus Figur 1.

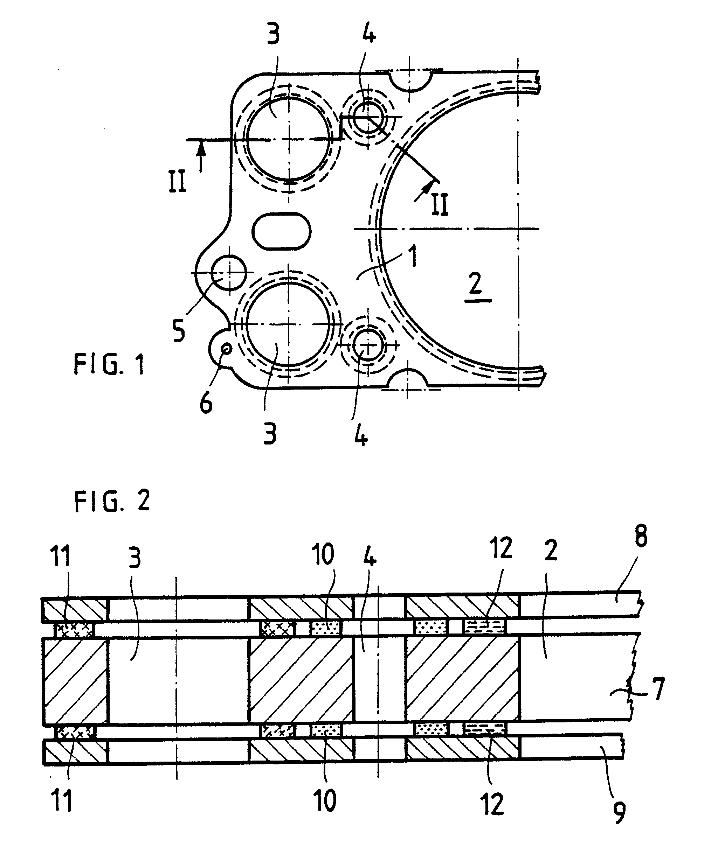

In Figur 1 ist 1 die Zylinderkopfdichtung mit den Durchgangsöffnungen für den Brennraum 2, für das Kühlmittel 4 und für das Schmieröl 3. Die Öffnungen 5 sind die Durchgangsöffnungen für die Befestigungsschrauben, und an den Punkten 6 sind die übereinanderliegenden Metallbleche durch Nieten miteinander verbunden.

Im Querschnittsbild der Figur 2 liegen die Metallbleche 7, 8, 9, zu einem Laminat verbunden, aufeinander, wobei das Kernblech 7 ein relativ dikkes und weiches Stahlblech ist, auf dem beidseitig die beiden relativ dünnen Deckbleche 8, 9 aus Federstahl aufliegen. Aus den Blechen 7, 8, 9 sind die Öffnungen 2, 3, 4 für den Brennraum 2, für das Schmieröl 3 und das Kühlmittel 4 ausgestanzt, und auf das Kernblech 7 sind rundum die Durchgangsöffnungen 2, 3, 4 die Auflagen 10, 11, 12 aus verschiedenen polymeren Werkstoffen im Siebdruckverfahren dreistufig aufgetragen. Die Auflage 10 am Kühlmitteldurchgang 4 besteht dabei aus einem Fluorkautschuk, die Auflage 11 am Schmieröldurchgang 3 aus einem Silikonkautschuk und die Auflage 12 am Brennraumdurchgang 2 aus einem durch Faserfüllstoffe druckfesten und temperaturbeständigen Fluorkautschuk.

## Ansprüche

1. Metallische Flachdichtung, insbesondere Zylinderkopfdichtung für Verbrennungskraftmaschinen, bestehend aus einem Metallplattenlaminat aus mindestens drei aufeinanderliegenden Metallplatten mit die Dichtpressung und Abdichtwirkung erhöhenden Maßnahmen an mindestens einer der Durchgangsöffnungen, dadurch gekennzeichnet, daß die die Dichtpressung und Abdichtwirkung erhöhenden Maßnahmen aus zwischen Kernblech (7) und Deckplatten (8, 9) angeordneten, die Durchgangsöffnungen (2, 3, 4) ringförmig umgebenden Auflagen (10, 11, 12) aus Weichstoffmaterial bestehen.

2. Flachdichtung nach Anspruch 1, dadurch gekennzeichnet, daß die Auflagen (10, 11, 12) beidseitig auf dem Kernblech (7) angeordnet sind.

3. Flachdichtung nach den Ansprüchen 1 und 2, dadurch gekennzeichnet, daß die Auflagen (10, 11, 12), alle Durchgangsöffnungen (2, 3, 4) für den Brennraum (2) und die Flüssigkeiten (3, 4) umgebend, auf dem Kernblech (7) angeordnet sind.

4. Flachdichtung nach den Ansprüchen 1 bis 3, dadurch gekennzeichnet, daß die Auflagen (10) 11, 12) durch Auftragen einer vulkanisierbaren Masse im Siebdruckverfahren auf das Kernblech (7) und anschließendes Trocknen und Ausvulkanisieren hergestellt und mit dem Kernblech (7) verbunden sind.

5. Flachdichtung nach den Ansprüchen 1 bis 4, dadurch gekennzeichnet, daß die Dichtung (1) aus drei übereinanderliegenden Stahlblechen (7, 8, 9) und das Kernblech (7) bei einer Dicke zwischen 0,5 und 2 mm aus einem relativ weichen Stahl besteht, daß die auf liegenden Deckbleche (8, 9) bei einer Dicke zwischen 0,1 und 0,4 mm aus Federstahl bestehen) und daß die Dicke der Auflagen (10, 11, 12) im Bereich zwischen 0,01 und 0,4 mm liegt.

6. Flachdichtung nach den Ansprüchen 1 bis 5, dadurch gekennzeichnet, daß die Auflagen (10, 11, 12) an den verschiedenen Durchgangsöffnungen (2, 3, 4) aus unterschiedlichen Materialien bestehen.

7. Flachdichtung nach den Ansprüchen 1 bis 6, dadurch gekennzeichnet, daß die Auflagen (10) an den Kühlmitteldurchgängen (4) aus einem Fluorkautschuk, daß die Auflagen (11) an den Schmieröldruchgängen (3) aus Silikonkautschuk und daß die Auflagen (12) an den Brennraumdurchgängen (2) aus mit anorganischen Füllstoffen und/oder Fasern verstärkten und dadurch druckfesten und temperaturbeständigen Fluorkautschuken bestehen.

EP 0 417 494 A2

FIG. 1

FIG. 2